# EUROPEAN PATENT APPLICATION

(11) **EP 2 076 080 A1**
(43) Date of publication of application: **01.07.2009**
(21) Application number: 09157221.4
(22) Date of filing: 14.01.2005
(51) Int. Cl.: H04W 48/18, H04L 12/28

(54) **Network selection when muliple networks are available in a coverage area**

(62) Divisional of application: 05250178.0
(71) Applicant: Research In Motion Limited, Waterloo, Ontario N2L 3W8 (CA)
(72) Inventor: Buckley, Adrian, Waterloo Ontario N2L 3W8 (CA); Carpenter, Paul, Waterloo Ontario N2L 3W8 (CA); Alfano, Nicholas. P, Waterloo Ontario N2L 3W8 (CA)
(74) Representative: Fennell, Gareth Charles

(57) **Abstract**

In one embodiment, a scheme is provided for network selection by a user equipment (UE) device (102) that is operable to discover multiple PLMNs in a location area. Each discovered PLMN is identified and an indicium (325) associated with the PLMN is presented to the user so that the user can select a particular PLMN.

## Description

### FIELD OF THE DISCLOSURE

The present patent disclosure generally relates to communication networks. More particularly, and not by way of any limitation, the present patent application is directed to a scheme for network selection when multiple networks are available in a coverage area.

### BACKGROUND

When a wireless network is deployed, there is a need to broadcast an identifier such that a wireless user equipment (UE) device wishing to obtain service can identify the wireless network. In a typical implementation, the name of the network may be displayed to the user in accordance with known cellular telephony standards. If multiple networks have the same name because they are equivalents, however, only that name is displayed to the user, thereby negating any user controllability in selecting a network. Additionally, this aspect is particularly disadvantageous where the multiple networks have different capabilities.

### SUMMARY

In one embodiment, a scheme is provided for network selection by a wireless UE device that is operable to discover multiple Public Land Mobile Networks (PLMNs) available in a location area. Each discovered PLMN is identified and an indicium associated with the PLMN is presented to the user so that the user can select a particular PLMN.

In one aspect, a network selection method is disclosed which comprises:
identifying a list of available PLMNs discovered through scanning by a UE device in a location area; presenting to a user an indicium associated with each of the available PLMNs; and selecting a particular PLMN by the user based at least in part upon the indicium for registering therewith.

In a still further aspect, a UE device is disclosed which comprises: a communication subsystem including a transceiver module operable for scanning in a cellular band to discover available Public Land Mobile Networks (PLMNs) in a location area; a logic module operable to identify a list of available PLMNs discovered through scanning in the cellular band; and a logic module for presenting to a user an indicium associated with each of the PLMNs, whereby the user can select a particular PLMN based on at least in part upon the indicium.

### BRIEF DESCRIPTION OF THE DRAWINGS

A more complete understanding of the embodiments of the present patent application may be had by reference to the following Detailed Description when taken in conjunction with the accompanying drawings wherein:

FIG. 1 depicts a generalized network environment wherein an embodiment of the present patent disclosure may be practiced;

FIG. 2 depicts an exemplary embodiment of a network environment where a user equipment (UE) wireless device is operably disposed for network discovery and selection in accordance with the teachings of the present patent disclosure;

FIGS. 3A and 3B depict exemplary database structures which may be provided with a UE device in accordance with the teachings of the present patent disclosure;

FIG. 4 depicts a flowchart of an embodiment of a network selection method;

FIG. 5 depicts an exemplary message flow diagram of the present patent disclosure;

FIG. 6 depicts graphical representation of a location area with availability of multiple PLMNs therein; and

FIG. 7 depicts a block diagram of an embodiment of a UE wireless device operable to perform network selection procedures set forth according to the teachings of the present patent disclosure.

### DETAILED DESCRIPTION OF THE DRAWINGS

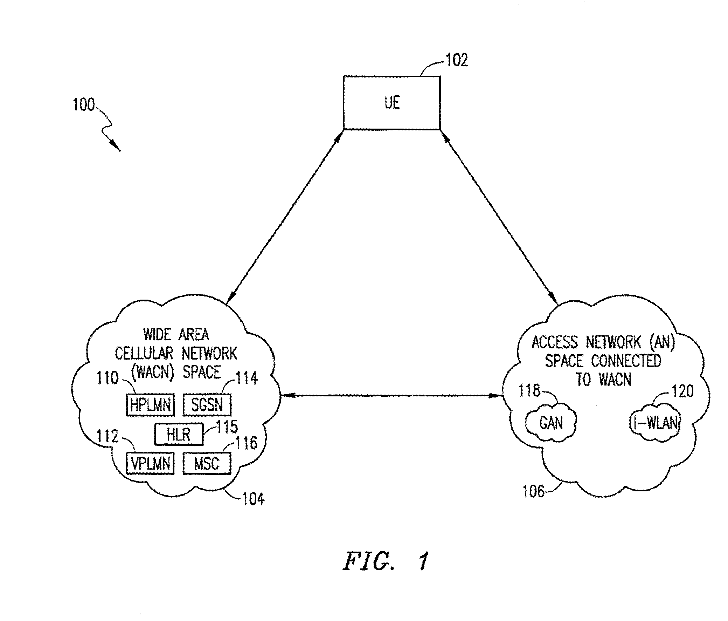

A system and method of the present patent disclosure will now be described with reference to various examples of how the embodiments can best be made and used. Like reference numerals are used throughout the description and several views of the drawings to indicate like or corresponding parts, wherein the various elements are not necessarily drawn to scale. Referring now to the drawings, and more particularly to FIG. 1 depicted therein is an exemplary generalized network environment 100 wherein an embodiment of the present patent disclosure may be practiced. A user equipment (UE) device 102 may comprise any portable computer (e.g., laptops, palmtops, or handheld computing devices) or a mobile communications device (e.g., cellular phones or data-enabled handheld devices capable of receiving and sending messages, web browsing, et cetera), or any enhanced personal digital assistant (PDA) device or integrated information appliance capable of email, video mail, Internet access, corporate data access, messaging, calendaring and scheduling, information management, and the like, that is preferably operable in one or more modes of operation and in a number of frequency bands. For example, UE device 102 may operate in the cellular telephony band frequencies as well as wireless Local Area Network (WLAN) bands. Further, other bands in which the UE device could operate wirelessly may comprise Wi-Max bands or one or more satellite bands. By way of illustration, the network environment 100 is comprised of two broad categories of communication spaces capable of providing service to UE device 102 wherein access to a Public Land Mobile Network (PLMN) may be accomplished in accordance with the teachings set forth herein. In wide area cellular network (WACN) space 104, there may exist any number of PLMNs that are operable to provide cellular telephony services which may or may not include packet-switched data services. Depending on the coverage area(s) and whether the user is roaming, WACN space 104 can include a number of home networks 110 (i.e., home PLMNs or HPLMNs, or equivalent HPLMNs or EHPLMNs), visited networks (i.e., VPLMNs) 112, each with appropriate infrastructure such as Home Location Register (HLR) nodes 115, Mobile Switching Center (MSC) nodes 116, and the like. Since the WACN space 104 may also include a General Packet Radio Service (GPRS) network that provides a packet radio access for mobile devices using the cellular infrastructure of a Global System for Mobile Communications (GSM)-based carrier network, a Serving GPRS Support Node (SGSN) 114 is exemplified therein. Additionally, by way of generalization, the PLMNs of the WACN space 104 may comprise networks selected from the group consisting of an Enhanced Data Rates for GSM Evolution (EDGE) network, an Integrated Digital Enhanced Network (IDEN), a Code Division Multiple Access (CDMA) network, a Time Division Multiple Access (TDMA) network, a Universal Mobile Telecommunications System (UMTS) network, or any 3^{rd} Generation Partnership Project (3GPP)-compliant network (e.g., 3GPP or 3GPP2), all operating with well known frequency bandwidths and protocols.

Further, UE device 102 is operable to obtain service from an access network (AN) space 106 that is connected to the WACN space 104. In one implementation, the AN space 106 includes one or more generic access networks (GANs) 118 as well as any type of wireless LAN (WLAN) arrangements 120, both of which may be generalized as any AN that is operable to provide access services between UE device 102 and a PLMN core network using a broadband Internet Protocol (IP)-based network. WLAN arrangements 120 provide short-range wireless connectivity to UE device 102 via access points (APs) or "hot spots," and can be implemented using a variety of standards, e.g., IEEE 802.11b, IEEE 802.11a, IEEE 802.11g, HiperLan and HiperLan II standards, Wi-Max standard, OpenAir standard, and the Bluetooth standard.

In one embodiment, interfacing between the WACN and AN spaces may be effectuated in accordance with certain standards. For instance, GAN 118 may be interfaced with one or more PLMNs using the procedures set forth in the 3GPP TR 43.901 and 3GPP TS 43.xxx documents as well as related documentation. Likewise, WLAN 120 may interfaced with at least one PLMN core using the procedures set forth in the 3GPP TS 22.234, 3GPP TS 23.234 and 3GPP TS 24.234 documents as well as related documentation, and may therefore be referred to as an Interworking WAN (I-WLAN) arrangement. For purposes of the present patent disclosure, these standards are incorporated by reference where applicable.

Given the mosaic of the network environment 100 in which UE device 102 may be disposed, it is desirable that a mechanism exists such that the user can select a particular PLMN from a host of PLMNs that may be discovered at a location area via scanning in cellular bands or in WLAN bands. It would be of further advantage to uniquely identify each of the multiple EHPLMNs so that the user can specify a particular network for service.

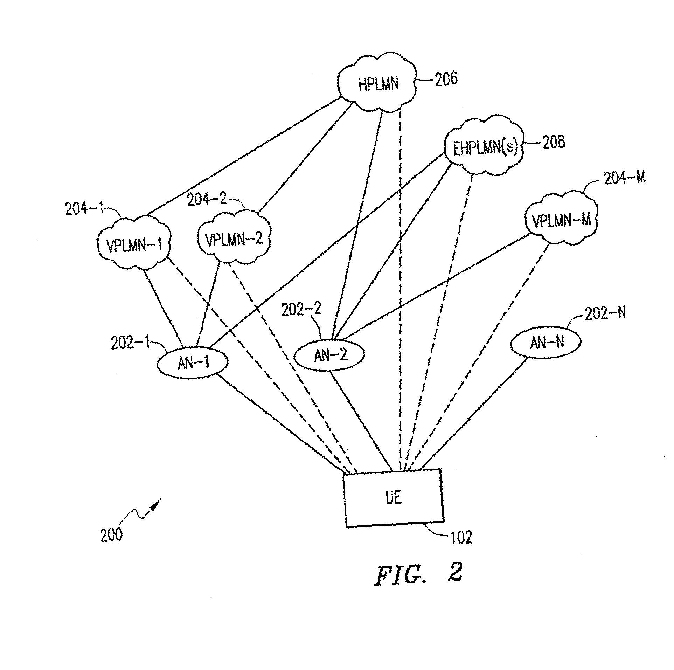

To formalize the teachings of the present disclosure, reference is now taken to FIG. 2 wherein an exemplary embodiment of a network environment 200 is shown that is a more concrete subset of the generalized network environment 100 illustrated in FIG. 1. As depicted, wireless UE device 102 is operably disposed for discovering a set of PLMNs that allow access via conventional radio access network (RAN) infrastructure in addition to having connectivity with one or more ANs accessible to UE device 102. By way of example, AN-1 202-1 through ANN 202-N, which are now generalized for purposes of the present patent disclosure to include any type of GAN, WLAN and/or I-WLAN arrangements (known or heretofore unknown), are operable to provide access to one or more PLMNs once discovered by the UE device. As illustrated, a wireless AN may support connectivity to one or more PLMNs, or none at all, which can include VPLMNs 204-1 through 204-M as well as HPLMNs (e.g., HPLMN 206) and one or more EHPLMNs 208 with respect to UE device 102. Where AN-PLMN connectivity is supporter, which PLMNs behind a particular AN are visible to UE device 102 may depend on a number of commercial factors, e.g., contractual arrangements between AN operators and PLMN operators. By way of illustration, AN-1 202-1 supports connectivity to VPLMN-1 204-1, VPLMN-204-2, and EHPLMN(s) 208. Likewise, AN-2 202-1 supports connectivity to VPLMN-M 204-M as well as to HPLMN 206 and EHPLMN(s) 208. On the other hand, AN-N 202-N has no connectivity to the wide area PLMNs. Furthermore, in addition to being able to access the various PLMNs via a wireless AN, UE 102 is also operable to scan the cellular bands to discover the PLMNs directly.

As is well known, each of the wide area cellular PLMNs may be arranged as a number of cells, with each cell having sectors (e.g., typically three 120-degree sectors per base station (BS) or cell). Each individual cell is provided with a Cell Global Identification (CGI) parameter to identify them. A group of cells is commonly designated as a Location Area (LA) and may be identified by an LA Identifier (LAI). At the macro level, the PLMNs may be identified in accordance with the underlying cellular technology. For example, GSM-based PLMNs may be identified by an identifier comprised of a Mobile Country Code (MCC) and Mobile Network Code (MNC). The CDMA/TDMA-based PLMNs may be identified by a System Identification (SID) parameter and/or a Network Identification (NID) parameter. Regardless of the cellular infrastructure, all cells broadcast the macro level PLMN identifiers such that a wireless device (e.g., UE device 102) wishing to obtain service can identify the wireless network.

Additionally, a subscriber is also given a unique identifier which can vary depending on the underlying cellular infrastructure and may be constructed at least in part from some of the parametrics that are used in constructing the network identifiers. In GSM, for example, an International Mobile Subscriber Identity (IMSI) parameter uniquely identifies the subscriber and is constructed as [MCC][MNC][MIN], where [MCC] identifies the country, that the subscriber is from, [MNC] identifies the PLMN network, and [MIN] is the unique ID that identifies the mobile unit (i.e., the UE wireless device) within the network.

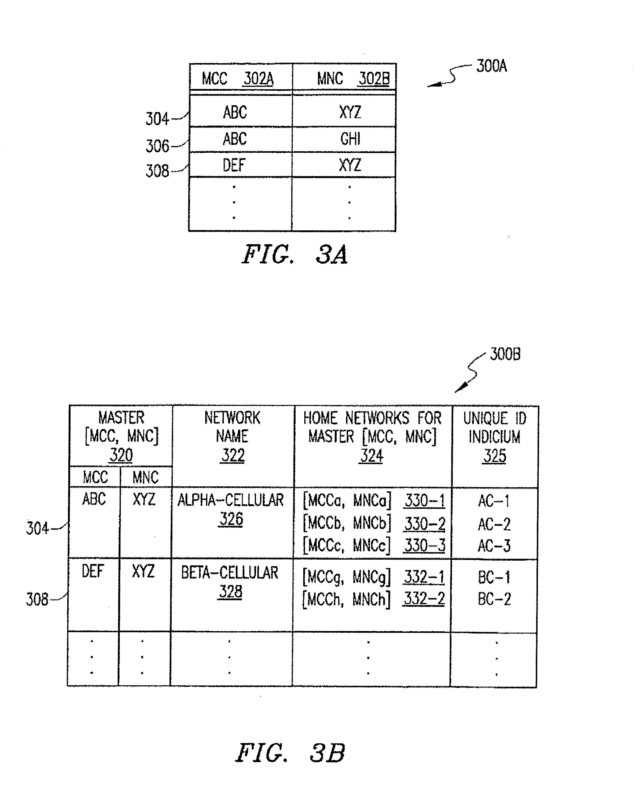

For purposes of illustration, the embodiments of the present patent disclosure will be particularly exemplified in reference to GSM networks, although it should be appreciated that the teachings set forth herein may be applied *mutatis mutandis* in other cellular networks as well. FIGS. 3A and 3B depict exemplary database structures which may be provided with a UE device for facilitating network selection in accordance with one embodiment. Reference numeral 300A refers to a basic database structure that comprises a list of [MCC] 302A and [MNC] 302B combinations that may be identified as being the same networks. In the case of equivalent networks, the [MCC][MNC] combinations may identify a set of EHPLMNs for the IMSI associated with the subscriber. Reference numerals 304, 306 and 308 refer to three exemplary networks, wherein networks 304 and 306 share the same [MCC], i.e., [ABC], and networks 304 and 308 share the same [MNC] (i.e., [XYZ]). In one exemplary embodiment, the data structure 300A may be stored as an elementary file (EF) structure on a Subscriber Identity Module (SIM) card or Removable User Identity Module (RUIM) card operable with a wireless UE device. In another embodiment, the data structure 300A could be stored in a memory module integrated with the wireless UE device.

Reference numeral 300B refers to an enhanced database structure where additional information may be provided for facilitating network selection. A Master [MCC][MNC] column 320 identifies the [MCC] and [MNC] combinations that match the IMSI's [MCC]/[MNC] part (i.e., Master Home PLMN). A network name column 322 identifies the master network by name. A home network (EHPLMN) column 324 includes a list of home networks for each of the Master [MCC][MNC] pairs. In one implementation, the [MCC][MNC] combinations identifying the home networks may be provided in a priority order. For example, a positional priority may be implemented wherein an [MCC] [MNC] combinations at the top has a higher priority over the one below it, or an [MCC][MNC] combination to the left has a higher priority over the one to the right. An explicit priority ranking may also be provided wherein an indicator indicating the priority of the PLMN is appended to the database structure 300B. For instance, a value of [0] may indicate the highest priority. Where there is no priority indicator stored, all PLMNs have equal priority. An indicium column 325 is provided for uniquely identifying each PLMN listed in the home network list 324, wherein the indicium may comprise a unique identity name that can include some reference to the Master [MCC][MNC] pair or the network name associated therewith.

Continuing to refer to FIG. 3B, the Master [MCC][MNC] combinations 304 and 308 are identified with the names ALPHA-CELLULAR 326 and BETA-CELLULAR 328, respectively. Three home networks are provided for the Master [MCC][MNC] combination 304: [MCCa,MNCa] 330-1, [MCCb,MNCb] 330-2 and [MCCc,MNCc] 330-3, each of which is uniquely identified with a name. Likewise, two home networks are provided for the Master [MCC][MNC] combination 308: [MCCg,MNCg] 332-1 and [MCCh,MNCh] 332-2. As before, the data structure 300B may be provided as part of a storage module integrated with the wireless UE device.

In one implementation, the wireless UE device is operable upon power-up to determine the capability of the SIM/RUIM card that has been inserted into it. If the wireless device discovers that the SIM/RUIM card contains a list of EHPLMNs, the device uses the list for subsequent network selection operation. If the SIM/RUIM card does not contain a list of PLMNs, the wireless device is operable to read the IMSI of the subscriber. Thereafter, if the wireless device is provided with stored home network lists in its memory for the [MCC][MNC] pairs of the IMSI, the stored PLMN database may then be used to find the list of HPLMNs associated with a particular IMSI. Otherwise, the wireless UE device is operable to perform network discovery procedures as currently specified.

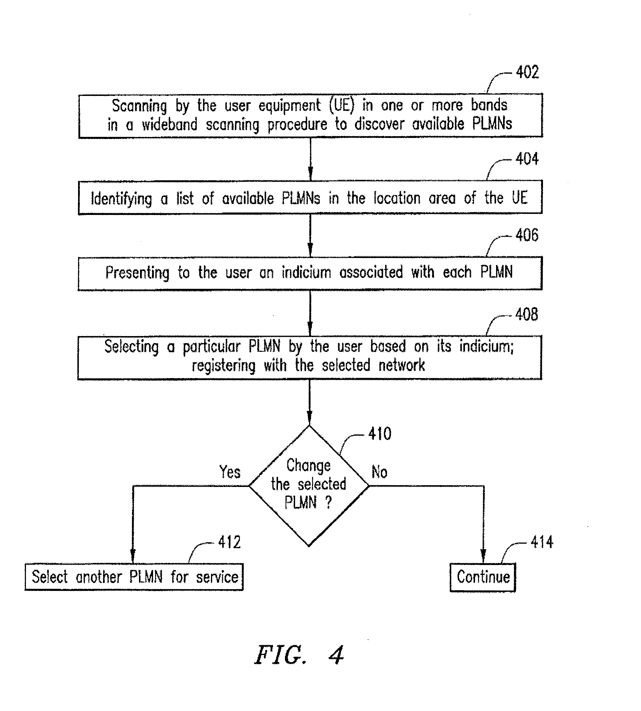

FIG. 4 depicts a flowchart of an embodiment of a network selection method. As illustrated, the wireless UE device is operable to scan in one or more frequency bands that it supports in a wideband scanning procedure to discover all available PLMNs in a location area where the device is disposed (block 402). As alluded to before, some of the PLMNs may be discovered by the UE via a suitable wireless AN scanning process that is effectuated in a frequency band compliant with a WLAN standard selected from the group consisting of: IEEE 802.11b standard, IEEE 802.11a standard, IEEE 802.11g standard, HiperLan standard, HiperLan II standard, Wi-Max standard, OpenAir standard, and Bluetooth standard. By way of example, where the UE is dual mode capable and when the UE finds a PLMN, it stores the networks identity (e.g., [MCC][MNC] combination) in memory or SIM or RUIM card associated with the user, until no more PLMNs can be found. As a further variation, in addition to storing the [MCC, MNC] combinations of all discovered PLMNs, the UE is capable of storing if a particular PLMN is GPRS capable or not, where such capability may be broadcast from the PLMN infrastructure. The UE is operable to perform network discovery procedures for WLAN as defined in current 3GPP TS 23.234 and 3GPP TS 24.234 specifications (incorporated by reference herein). If the WLAN finds a Service Set ID (SSID) that it knows is the HPLMN, the UE authenticates with that WLAN using the Root Network Access Identifier (NAI). Otherwise, the UE performs network discovery as specified in the 3GPP TS 23.234 and 3GPP TS 24.234 specifications. As a further variation, in addition to the SSID lists defined in the 3GPP specifications for WLAN access, extra SSID/PLMN lists and associated filtering criteria can be stored so that the UE is not only aware of the WLANs that support PLMN access, but a mechanism is provided thereby to speed up network selection as well as optimize/customize the user experience. By way of illustration, the following lists may be defined:
S Operator-controlled Preferred SSIDs for WLAN access;
S User-controlled SSIDs for WLAN access;
S Forbidden SSIDs for WLAN access;
S Operator-controlled Preferred PLMNs for WLAN access;
S User-controlled PLMNs for WLAN access;
S Forbidden PLMNs for WLAN access;
wherein the priority of the SSID and PLMN is dictated by its position in the list.

Upon identifying a list of available PLMNs in the location area of the UE (block 404), a unique indicium associated with each of the PLMNs is presented to the user via a display (block 406). The unique indicium may include a reference, by name or otherwise, to the Master HPLMN (where an equivalent HPLMN is identified). Additionally, a capability-based indicium may also be presented in some embodiments. Thereafter, the user can select a particular PLMN based at least in part upon the indicia associated with the network for registration therewith (block 408). If the user desires to change the selected PLMN for any reason (insufficient signal strength, lack of IP capabilities, Quality of Service, et cetera) (decision block 410), another PLMN may be selected from the list of the available PLMNs (block 412). Otherwise, the user may proceed with the registration process with the previously selected PLMN (block 414).

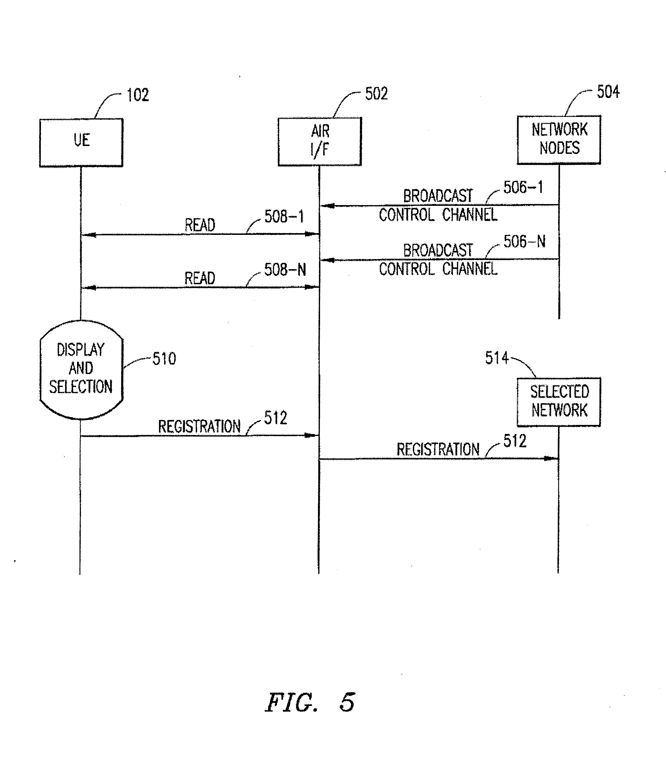

FIG. 5 depicts an exemplary message flow diagram in reference to the methodology set forth above. One or more network nodes 504 are operable to broadcast information over associated control channels over the air interface 502. In accordance with the teachings of the present patent disclosure, the network nodes 504 may comprise Base Transceiver Station (BTS) nodes deployed in various cellular networks. Reference numerals 506-1 through 506-N refer to the control channel messages that are broadcast by the network nodes at a designated repetition rate. In one implementation, the broadcast information may include network identity information, capability information, adjacent cell information, among other types of information. UE 102 is operable to read the broadcast information over the air interface 502 and based at least in part upon the stored PLMN indicia database, display appropriate indicia to the user that uniquely identity each of the discovered PLMN (block 510). Upon selection of a particular network, UE 102 is able to effectuate registration 512 with the selected network 514.

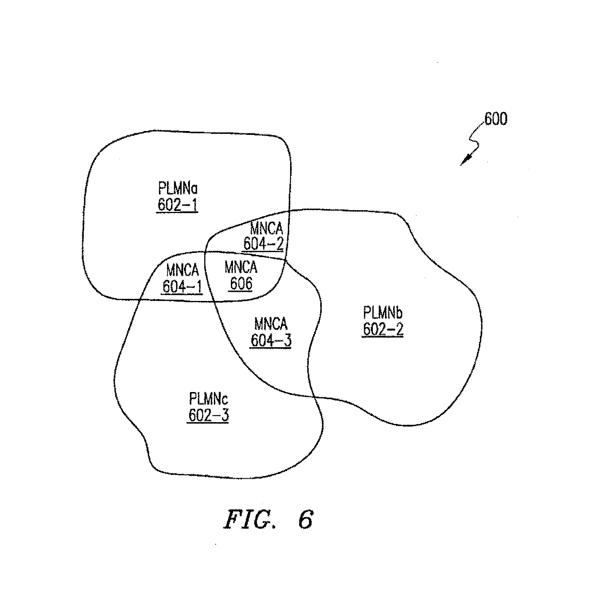

FIG. 6 depicts a graphical representation of availability of multiple PLMNs in an exemplary location area 600. Three networks are illustrated: PLMNa 602-1, PLMNb 602-2, and PLMNc 602-3. Due to the networks' coverage overlap, one or more multi-network coverage areas or MNCAs are possible in the illustrates scenario. For instance, MNCA 604-1 defines a coverage area where both PLMNa and PLMNc are available. Likewise, MNCA 604-2 and MNCA 604-3 define coverage area with PLMNa/PLMNb and PLMNb/PLMNc combinations, respectively. Also, MNCA 606 defines a region where all three networks are available. When a UE discovers multiple networks in the location area 600, each is displayed to the user with a unique ID, even where the networks are EHPLMNs.

Set forth below are a few exemplary scenarios where network selection may be made in accordance with the teachings of the present patent disclosure.

I. When the UE device discovers one PLMN which it may identify as a home network, two possible implementations arise. In the case of the HPLMN, the device may display only the network ID (e.g., the [MCC][MNC] combination) that is identified as the Master HPLMN, or if stored in the device, the name/indicium that is associated with the network ID. In another implementation, additional identification or reference to the Master network ID or its name may be appended.

II. In manual selection mode, when the UE device discovers two or more PLMNs that it identifies as having the same network name, then the device may display to the user that two or more instances of the network are available. In the case of EHPLMNs, the identification may be resolved by appending the Master home network ID with some additional text or numeric information.

III. In another implementation with respect to the case of multiple EHPLMNs, the wireless UE device may display the Master home network ID and proceed to do one of the following: (a) The user of the device would select the Master home network, which is resolved by the device to select a particular HPLMN with the highest priority in the list that is being used by the device; (b) The user of device would select the Master home network, which is resolved by the device to select the first HPLMN that it found; (c) The user of the device would select the Master home network, which is resolved by the device to select a particular HPLMN with the highest signal strength; (d) Upon selecting the Master home network by the user, the device may select a particular HPLMN with the highest priority in the list that is being used by the device. If another scan by the device is required and the same or a subset of the PLMNs are subsequently found, the device could select another network which may not necessarily be the HPLMN selected previously; and (e) Upon selecting the Master home network by the user, the device may randomly select a particular HPLMN from the list.

IV. Where there are multiple [MCC][MNC] combinations that have been provided with a single network name, the wireless UE device may display the network name for each combination including a suffix to indicate that they are distinct networks. Additionally, the capabilities of each network may be ascertained and displayed to the user.

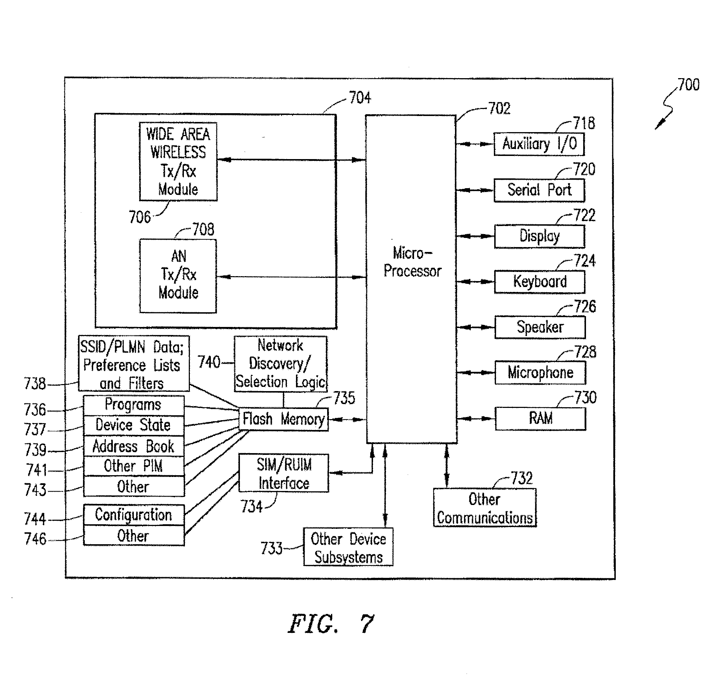

FIG. 7 depicts a block diagram of an embodiment of a UE wireless device 700 operable to perform network selection procedures set forth according to the teachings of the present patent disclosure. It will be recognized by those skilled in the art upon reference hereto that although an embodiment of UE 102 may comprise an arrangement similar to one shown in FIG. 7, there can be a number of variations and modifications, in hardware, software or firmware, with respect to the various modules depicted. Accordingly, the arrangement of FIG. 7 should be taken as illustrative rather than limiting with respect to the embodiments of the present patent disclosure. A microprocessor 702 providing for the overall control of UE 700 is operably coupled to a communication subsystem 704 which includes transmitter/receiver (transceiver) functionality for effectuating multi-mode communications over a plurality of bands. By way of example, a wide area wireless Tx/Rx module 706 and a wireless AN Tx/Rx module 708 are illustrated. Although not particularly shown, each Tx/Rx module may include other associated components such as one or more local oscillator (LO) modules, RF switches, RF bandpass filters, A/D and D/A converters, processing modules such as digital signal processors (DSPs), local memory, etc. As will be apparent to those skilled in the field of communications, the particular design of the communication subsystem 704 may be dependent upon the communications networks with which the UE device is intended to operate. In one embodiment, the communication subsystem 704 is operable with both voice and data communications.

Microprocessor 702 also interfaces with further device subsystems such as auxiliary input/output (I/O) 718, serial port 720, display 722, keyboard 724, speaker 726, microphone 728, random access memory (RAM) 730, a short-range communications subsystem 732, and any other device subsystems generally labeled as reference numeral 733. To control access, a SIM/RUIM interface 734 is also provided in communication with the microprocessor 702. In one implementation, SIM/RUIM interface 734 is operable with a SIM/RUIM card having a number of key configurations 744 and other information 746 such as identification and subscriber-related data as well as one or more SSID/PLMN lists and filters described in detail hereinabove.

Operating system software and other control software may be embodied in a persistent storage module (i.e., non-volatile storage) such as Flash memory 735. In one implementation. Flash memory 735 may be segregated into different areas, e.g., storage area for computer programs 736 as well as data storage regions such as device state 737, address book 739, other personal information manager (PIM) data 741, and other data storage areas generally labeled as reference numeral 743. Additionally, appropriate network discovery/selection logic 740 may be provided as part of the persistent storage for executing the various procedures, correlation techniques, and display selection mechanisms set forth in the preceding sections. Associated therewith is a storage module 738 for storing the SSID/PLMN lists, selection/scanning filters, capability indicators, et cetera, also described in detail hereinabove.

A network selection method includes: identifying a list of available Public Land Mobile Networks (PLMNs) discovered through scanning by a user equipment (UE) device in a location area; presenting to a user an indicium associated with each of the available PLMNs; and, selecting a particular PLMN by said user based at least in part upon said indicium for registering therewith.

The particular PLMN may include a wide area cellular network selected from the group consisting of a General Packet Radio Service (GPRS) network, an Enhanced Data Rates for Global System for Mobile Communications (GSM) Evolution (EDGE) network, a 3^{rd} Generation Partnership Project (3GPP)-compliant network, an Integrated Digital Enhanced Network (IDEN), a Code Division Multiple Access (CDMA) network, a Universal Mobile Telecommunications System (UMTS) network, and a Time Division Multiple Access (TDMA) network.

At least a portion of the available PLMNs may be discovered in a wideband scanning process effectuated by said UE device in cellular telephony bands.

At least a portion of the available PLMNs may be discovered in a wireless access network scanning process effectuated by said UE device. In such case, the wireless access network scanning process is effectuated in a frequency band compliant with a Wireless Local Area Network (WLAN) standard selected from the group consisting of: IEEE 802.11b standard, IEEE 802.11a standard, IEEE 802.11g standard, HiperLan standard, HiperLan II standard, Wi-Max standard, OpenAir standard, and Bluetooth standard.

Any of the foregoing methods may further include selecting (412) a different PLMN from the available PLMNs.

In any of the foregoing methods, at least a portion of the available PLMNs may be Equivalent Home PLMNs with respect to a subscriber identity associated with the UE device.

In any of the foregoing methods, the indicium may include a unique name identifying each of the PLMNs, the indicium being stored in a database structure provided with the UE device. In such case, the database structure may be provided as a file on one of a Subscriber Identity Module (SIM) card and a Removable User Identity Module (RUIM) card operable with said UE device, or the database structure may be stored in a memory module integrated with said UE device.

A user equipment (UE) device includes: a communication subsystem including a transceiver module operable for scanning in a cellular band to discover available Public Land Mobile Networks (PLMNs) in a location area; a logic module operable to identity a list of available PLMNs discovered through scanning in the cellular band; and, a logic module for presenting to a user an indicium associated with each of the PLMNs, whereby the user can select a particular PLMN based on at least in part upon the indicium.

The particular PLMN may include a wide area cellular network selected from the group consisting of a General Packet Radio Service (GPRS) network, an Enhanced Data Rates for Global System for Mobile Communications (GSM) Evolution (EDGE) network, a 3^{rd} Generation Partnership Project (3GPP)-compliant network, an Integrated Digital Enhanced Network (IDEN), a Code Division Multiple Access (CDMA) network, a Universal Mobile Telecommunications System (UMTS) network, and a Time Division Multiple Access (TDMA) network.

The communication subsystem may include a transceiver module operable for scanning in a frequency band compliant with a wireless access network scanning process, said frequency band comprising a Wireless Local Area Network (WLAN) standard selected from the group consisting of: IEEE 802.11b standard, IEEE 802.11a standard, IEEE 802.11g standard, HiperLan standard, HiperLan II standard, Wi-Max standard, OpenAir standard, and Bluetooth standard. In such subsystem, at least a portion of the available PLMNs may be discovered in the wireless access network scanning process effectuated by the UE wireless device.

In any of the foregoing devices, the indicium may include a unique name identifying each of said PLMNs.

In any of the foregoing devices, the logic module for presenting an indicium may be operable responsive to a database structure provided with the UE device. In such case, the database structure may be provided as a file on one of a Subscriber Identity Module (SIM) card and a Removable User Identity Module (RUIM) card operable with the UE device, or may be stored in a memory module integrated with the UE device.

It is believed that the operation and construction of the embodiments of the present patent application will be apparent from the Detailed Description set forth above. While the exemplary embodiments shown and described may have been characterized as being preferred, it should be readily understood that various changes and modifications could be made therein without departing from the scope of the present invention as set forth in the following claims.

## Claims

1. A method for facilitating manual network selection for a user equipment "UE" device (102), the method comprising:
presenting on the UE device (102) a unique indicium (325) of a plurality of available equivalent home Public Land Mobile Networks "EHPLMNs" (208) in a priority order defined by a list stored on a module.

2. The method of claim 1, wherein the module is one of a Subscriber Identity Module "SIM" card and a Removable User Identity Module "RUIM".

3. The method of claim 1, further comprising receiving a selection of one of the plurality of available EHPLMNs (208).

4. A user equipment "UE" device (102) for manual network selection, the UE device (102) comprising:
a logic module configured to present a unique indicium (325) of a plurality of available equivalent home Public Land Mobile Networks "EHPLMNs" (208) in a priority order defined by a list stored on a module.

5. The user equipment of claim 4, wherein the module is one of a Subscriber Identity Module "SIM" card and a Removable User Identity Module "RUIM".

6. The user equipment of claim 4, wherein the logic module is further configured to receive a selection of one of the plurality of available EHPLMNs (208).
